(19) Europäisches Patentamt
European Patent Office
Office européen des brevets

(11) **EP 4 619 563 B1**

(12) **EUROPEAN PATENT SPECIFICATION**

(45) Date of publication and mention
of the grant of the patent:
**03.06.2026 Bulletin 2026/23**

(21) Application number: **23793505.1**

(22) Date of filing: **18.08.2023**

(51) International Patent Classification (IPC):
*C22C 28/00* (2006.01)    *C22B 5/04* (2006.01)
*C22B 5/10* (2006.01)    *C22B 34/32* (2006.01)

(52) Cooperative Patent Classification (CPC):
**C22C 28/00;** C22B 5/04; C22B 5/10; C22B 34/32

(86) International application number:
**PCT/PL2023/050068**

(87) International publication number:
**WO 2025/042299 (27.02.2025 Gazette 2025/09)**

(54) **COMPLEX MULTI-COMPONENT ALLOY OF SILICON, CHROMIUM AND IRON**

KOMPLEXE MULTIKOMONENTEN-LEGIERUNG AUS SILIZIUM, CHROM UND EISEN

ALLIAGE COMPLEXE MULTI-COMPONENT DE SILICIUM, CHROME ET FER

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**24.09.2025 Bulletin 2025/39**

(73) Proprietor: **RE ALLOYS SP. Z O.O.
43-170 Laziska Gorne (PL)**

(72) Inventors:
• **MISKIEWICZ, Radoslaw
43-170 Laziska Gorne (PL)**
• **WILCZEK, Miroslaw
44-240 Zory (PL)**

• **BANASIK, Lukasz
44-240 Zory (PL)**
• **KOZLOWSKI, Slawomir
43-170 Laziska Gorne (PL)**

(74) Representative: **Czarnik, Maciej
Triloka Czarnik Ozóg Kancelaria Patentowa i
Adwokacka sp.p.
ul. Kornela Ujejskiego 12/7
30-102 Kraków (PL)**

(56) References cited:
**WO-A2-2018/068066**    **CN-U- 207 973 790**
**US-B2- 11 542 578**

**Description**

The invention relates to a complex multi-component alloy of iron, silicon and chromium comprising aluminium, calcium and carbon in an amount not exceeding 0.02 % wt. relative to the total weight of the alloy. The chromium to iron ratio in the alloy of the invention is at least 2.0. The alloy is produced using the carbothermic reduction method of $SiO_2$, CaO, FeO, $Al_2O_3$ in the presence of chromium and iron derived from high-carbon ferrochrome in a resistance-arc furnace, and then subjected to ladle decarburisation refining. This type of alloy is used in ferroalloy metallurgy, especially as a reductant of $Cr_2O_3$ comprised in chromium ore in the production of low-carbon ferrochrome (FeCr LC). The alloy according to the invention allows increasing the chromium yield from chromium ore to low carbon ferrochrome, reducing the mass content of $Cr_2O_3$ in the waste slag by increasing the reduction potential with respect to $Cr_2O_3$ in chromium ore.

Various types of alloys of iron, silicon and chromium are known in the state of the art, including those described in the international standard ISO 5449:1980 *(Ferrosilicochromium - Specification and conditions of delivery)*, which describes an alloy of iron, chromium and silicon obtained by reduction or fusion, comprising chromium in an amount of 20.0 to 65.0 % wt. and silicon in an amount of 10.0 to 60.0 % wt.

On the other hand, international patent application WO2019240589 A1 presents a silicon-based alloy comprising 45-95 % wt. silicon, not more than 0.05 % wt. carbon, 0.4-30 % wt. chromium, 0.01-10 % wt. aluminium, 0.01-0.3 % wt. calcium, not more than 0.10 % wt. titanium, not more than 25 % wt. manganese, 0.005-0.07 % wt. phosphorus, 0.001-0.02% wt. sulphur, and the rest is iron and trace amounts of phosphorus and sulphur. The alloy described in this international patent application differs from that described in this patent application in its calcium content.

European patent application EP3075869 A1 presents a method for producing FeSiAl alloys in which carbon rock is mixed with quartzite, iron-bearing material and wood chips, if necessary, carbon with high volatile content, in a specified proportions, and the homogenised batch material is loaded into a melting furnace to produce FeSiAl alloy. The batch mix comprises 1.5-4.5% $Fe_2O_3$, 55-65% $SiO_2$, 25-35% $Al_2O_3$, 32-34% CaO, 0.3-3% MgO 0.3-2% $TiO_2$ and trace amounts of phosphorus and sulphur. The alloy obtained in the described process comprises (% wt.): 40-85% silicon, 1-40% aluminium, 0.001-1.0% carbon, up to 2% titanium, up to 1.0% calcium and traces of phosphorus and sulphur, the rest is iron.

In turn, European patent EP2295614 B1 discloses the composition of an alloy for deoxidation and introduction of alloying additives comprising 45.0-63.0 % wt. silicon, 10.0-25.0 % wt. aluminium, 1.0-10.0 % wt. calcium, 1.0-10.0 % wt. barium, 0.3-0.5 % wt. vanadium, 1.0-10.0 % wt. titanium, 0.1-1.0 % wt. carbon, the rest is iron.

US 11542578 B2 discloses a complex multi-component alloy.

The object of the invention was to develop a new complex multi-component alloy of iron, silicon and chromium with a high reduction potential for the metallothermic production process of FeCr LC. A critical qualitative feature of iron-silicon-chromium alloys from the point of view of their use as a reductants in FeCr LC production processes and a deoxidising agents in the production of high-chromium ferritic and austenitic steels is their reduction potential, which depends on the content of elements with a higher affinity for oxygen than chromium. Due to its high reduction potential, this alloy can be used to increase the chromium yield from chromite ore and reduce the residual mass of $Cr_2O_3$ in the waste slag. An additional purpose of the invention is to reduce the content of harmful admixtures in FeCr LC. Impurities comprised in chromite ore reductants are the main source of impurities in FeCr LC, from where, in the process of obtaining high chromium steels, for example, austenitic stainless steels, they pass into the finished product, significantly reducing its strength parameters. The biggest contaminant is carbon, which has a significant chemical affinity for chromium and forms carbides $Cr_{23}C_6$ with it, which diffuse toward grain boundaries, which in turn contributes to selective corrosion in chromium-depleted zones, leading to embrittlement of such steel. Another very important feature of the new alloy is its energy potential related to its high content of elements with a high affinity for oxygen, such as silicon, calcium and aluminium, whose exothermic oxidation processes will make a significant energy contribution to the ladle treatment processes of high-chromium slags carried out in the production of FeCr LC. Another object of the invention is to expand the raw material base for the production of FeCr LC. Currently, the depletion of the rich chromium ores and the resulting need to use poor chromium ores with increased MgO content (up to 22%) and reduced $Cr_2O_3$ content in ferroalloys metallurgy can be observed, resulting in increased electricity consumption rate and raw materials per ton of alloy, increased losses associated with incomplete reduction of chromium oxides, and increased slag-to-metal ratio. Since chromium spinels are among the hard-fusible compounds, which worsens the possibility of chromium-to-metal transition, some Cr retains in the slag in the form of metallic inclusions and in the form of oxides of CrO and $Cr_2O_3$. The slags formed in the smelting of FeCr LC comprise 8 to 12 % wt. $Cr_2O_3$ and are characterised by significant viscosity. By using the process of the invention, the final yield of Cr to the alloy will be more than 95%, and the residual content of $Cr_2O_3$ in the waste slag of less than 3 % wt.

A lower silicon content results in a decrease in the reduction potential of the alloy, while a higher silicon content results in a lower chromium content and thus a deterioration in the efficiency of the FeCr LC production process by metallothermic reduction method.

Preferably, when the multi-component alloy of iron, silicon and chromium comprises calcium in an amount of 0.5 to 1.2 % wt. relative to the total weight of the alloy. Lower and higher calcium content causes a decrease in the reduction potential in the production of FeCr LC. In addition, the higher Ca content of the finished alloy requires a higher energy input for the calcium to be reduced from CaO in the carbothermic process of obtaining the invention in an arc-resistance furnace.

Preferably, when the multi-component alloy of iron, silicon and chromium comprises aluminium in an amount of 0.5 to 1.3 % wt. relative to the total weight of the alloy. Lower and higher aluminium content results in a decrease in the reduction potential in the production of FeCr LC. In addition, the higher Al content in the finished alloy requires a higher energy input for the aluminium to be reduced from the $Al_2O_3$ in the carbothermic process of obtaining the invention in an arc-resistance furnace.

In another aspect, the object of the invention is also a method for producing a complex multi-component alloy of iron, silicon and chromium according to the invention, characterised in that the oxides of $SiO_2$, CaO, FeO, $Al_2O_3$ are reduced carbothermically in the presence of chromium and iron derived from high-carbon ferrochrome in an arc-resistance furnace, and then subjected to ladle decarburisation refining. Such a method makes it possible to increase the yield of Si and Cr to the alloy of the invention, lowers the electricity consumption rate, simplifies the technology for obtaining the alloy, and makes it possible to achieve a very low carbon content.

The invention also includes the use of a complex multi-component alloy of iron, silicon and chromium according to any of the claims 1 to 6 to reduce $Cr_2O_3$ comprised in chromium ore in the process of obtaining low-carbon ferrochrome.

The alloy of iron, silicon and chromium according to the embodiment was obtained by a process in which a mixture of feedstock raw materials for the production of the alloy is introduced periodically in specified proportions into the working space of the bath of a semi-closed, low-shaft, arc-resistance furnace by a method involving the simultaneous liquid transition of high-carbon ferrochrome parameters listed in Table 1, the reduction of $SiO_2$ comprised in quartzite with the parameters listed in Table 2, reduction of $Al_2O_3$ comprised in ceramic waste with the parameters listed in Table 3, reduction of CaO comprised in limestone with the parameters listed in Table 4, and reduction of FeO comprised in mill scale with the parameters listed in Table 5, with the use of elemental carbon comprised in hard coal with the parameters listed in Table 6 and chromium carbides comprised in high carbon ferrochrome, then dissolving the resulting Si-Al-Ca-Fe alloy in liquid ferrochrome, performing a tapping of the smelting products from the bath of the arc-resistance furnace into a tapping ladle, pouring the alloy into a refining ladle and performing decarburisation refining, and then pouring the alloy into a set of iron ingots with separating the material with higher carbon content.

#### Table 1. Chemical composition of high carbon ferrochrome

| Component | Cr | Si | Fe | Mn | P | Al | C | S |
|---|---|---|---|---|---|---|---|---|
| Content, % by weight. | 63.68 | 0.94 | 25.16 | 0.103 | 0.019 | 0.019 | 9.11 | 0.030 |

#### Table 2. Chemical composition of quartzite

| Component | $SiO_2$ | $Al_2O_3$ | $Fe_2O_3$ | CaO |
|---|---|---|---|---|
| Content, % by weight. | 99.23 | 0.226 | 0.340 | 0.114 |

#### Table 3. Chemical composition of ceramic waste

| Component | $MgO+CaO+K_2O+Na_2O$ | $Al_2O_3$ | $SiO_2$ | $P_2O_5$ | $TiO_2$ | $Fe_2O_3$ |
|---|---|---|---|---|---|---|
| Content, % by weight. | <3.0 | 55.03 | 40.11 | <0.1 | <0.1 | <1.00 |

#### Table 4. Chemical composition of limestone

| Component | $CaCO_3$ | $SiO_2$ | $Fe_2O_3+Al_2O_3$ |
|---|---|---|---|
| Content, % by weight. | 97.5 | 0.43 | 0.10 |

#### Table 5. Chemical composition of mill scale in terms of pure elements

| Component | Fe | Cr | Mn | Ca | P | Ti |
|---|---|---|---|---|---|---|
| Content, % by weight. | 77.9 | 1.00 | 0.22 | 0.25 | 0.020 | 0.018 |

#### Table 6. Parameters and chemical composition of hard coal

| Component | Content, % by weight. |
|---|---|
| Moisture, as received basis, $W^r$ | 15.1 |

(continued)

| Component | Content, % by weight. |
|---|---|
| Volatile, as received basis, $V^r$ | 35.06 |
| Ash, as received basis, $A^r$ | 4.84 |
| $SiO_2$, as received basis | 2.62 |
| $Al_2O_3$, as received basis | 0.835 |
| $Fe_2O_3$, as received basis | 0.271 |
| $P_2O_5$, as received basis | 0.012 |
| CaO, as received basis | 0.228 |
| S, as received basis | 0.283 |

The furnace used to produce alloy of iron, silicon and chromium according to the embodiment is equipped with a 12 MVA three-phase transformer, a round bath, three self-baking electrodes with a diameter of 900 mm, a low hood with five windows intended for the introduction of the batch mixture using buckets of loading machines and one tapping hole intended for periodic tapping of the smelting products, operating in continuous mode with an active power of 7.8 MW and an electrode current in the range of 32-35 kA.

Five alloy samples with different compositions (P1-P5) were prepared using different amounts of raw materials. Raw material and electricity consumption rates for alloy production are included in Table 7.

**Table 7. Raw material consumption rates for the production of the alloy according to the invention**

| Item number | Ingredient consumption | u.m. | P1 | P2 | P3 | P4 | P5 |
|---|---|---|---|---|---|---|---|
| 1 | High carbon ferrochrome | kg/t | 380 | 379 | 397 | 435 | 438 |
| 2 | Quartzite | kg/t | 1650 | 1617 | 1545 | 1648 | 1574 |
| 3 | Hard coal | kg/t | 1352 | 1390 | 1294 | 1345 | 1320 |
| 4 | Wood chips | kg/t | 342 | 314 | 299 | 315 | 315 |
| 5 | Mill scale | kg/t | - | 8 | 12 | 5 | 5 |
| 6 | Limestone | kg/t | 100 | 280 | 190 | 80 | 120 |
| 7 | Ceramic waste | kg/t | 25 | 50 | 120 | 55 | - |
| 8 | Electrode paste | kg/t | 45 | 41 | 39 | 41 | 40 |
| 9 | Electricity consumption | kWh/t | 7341 | 7104 | 7342 | 7150 | 7103 |
| 10 | Daily capacity of the furnace | t | 23.5 | 25.1 | 24.4 | 25.4 | 26 |

The chemical composition of the samples of the resulting alloy (P1-P5) along with the comparative samples (PP1-PP5) prepared for the reduction potential test are shown in Table 8.

**Table 8. Chemical composition of the alloy from the embodiment and for comparative samples**

| Component | P1 | P2 | P3 | P4 | P5 | PP1 | PP2 | PP3 | PP4 | PP5 |
|---|---|---|---|---|---|---|---|---|---|---|
| | Alloy samples according to the invention | | | | | Comparative samples | | | | |
| Cr | 21.52 | 21.69 | 22.79 | 23.16 | 24.02 | 26.34 | 26.51 | 22.86 | 34.1 | 26.58 |
| Si | 66.53 | 63.46 | 61.94 | 65.09 | 63.29 | 59.96 | 56.86 | 60.93 | 47.85 | 60.48 |
| Fe | 10.2 | 10.72 | 10.64 | 10.33 | 10.96 | 7.47 | 6.48 | 10.58 | 17.21 | 6.21 |
| Al | 0.596 | 1.264 | 3.066 | 1.01 | 0.154 | 6.112 | 5.899 | 1.076 | 0.11 | 4.114 |
| Ca | 0.598 | 2.059 | 1.046 | 0.318 | 0.61 | 0.024 | 4.004 | 4.041 | 0.008 | 2.011 |
| C | 0.018 | 0.015 | 0.008 | 0.011 | 0.019 | 0.006 | 0.022 | 0.008 | 0.011 | 0.006 |

(continued)

| Component | P1 | P2 | P3 | P4 | P5 | PP1 | PP2 | PP3 | PP4 | PP5 |
|---|---|---|---|---|---|---|---|---|---|---|
| | Alloy samples according to the invention | | | | | Comparative samples | | | | |
| Cr/Fe | 2.11 | 2.02 | 2.14 | 2.24 | 2.28 | 3.53 | 4.09 | 2.16 | 1.98 | 4.28 |

The resulting alloy grades in the embodiment with the chemical composition indicated in Table 8 were used in the reduction of chromite ore with the chemical composition indicated in Table 9 in the production of FeCr LC.

**Table 9. Chemical composition of chrome ore concentrate**

| Component | $Cr_2O_3$ | FeO | $SiO_2$ | CaO | MgO | $Al_2O_3$ | P | S | $TiO_2$ | NiO | MnO | $V_2O_5$ | ZnO |
|---|---|---|---|---|---|---|---|---|---|---|---|---|---|
| % by weight. | 51.78 | 16.41 | 3.38 | 0.92 | 15.77 | 10.01 | 0.002 | 0.008 | 0.143 | 0.17 | 0.17 | 0.13 | 0.043 |

As a result of using the alloys according to the embodiment in the reduction of chromite ore, a FeCr LC alloy was obtained with the chemical composition cited in Table 10 and a waste slag with the chemical composition presented in Table 11. In addition, Tables 10 and 11 show the results of chromite ore reduction for comparative alloys.

**Table 10. Summary results of FeCr LC chemical analysis**

| Alloy grade | Chemical composition of FeCr LC [% wt.] | | | | | |
|---|---|---|---|---|---|---|
| | Cr | Fe | Si | Ca | Al | C |
| P1 | 68.57 | 29.12 | 1.19 | 0.0125 | 0.0135 | 0.012 |
| P2 | 68.61 | 29.07 | 1.11 | 0.0165 | 0.0183 | 0.011 |
| P3 | 68.01 | 28.95 | 1.6 | 0.0355 | 0.0666 | 0.014 |
| P4 | 68.32 | 29.17 | 1.17 | 0.0183 | 0.0119 | 0.012 |
| P5 | 67.94 | 29.63 | 1.1 | 0.035 | 0.053 | 0.012 |
| PP1 | 65.69 | 31.13 | 1.83 | 0.0643 | 0.0207 | 0.015 |
| PP2 | 66.08 | 31.57 | 1.07 | 0.0279 | 0.0406 | 0.017 |
| PP3 | 67.78 | 29.09 | 1.78 | 0.0741 | 0.0327 | 0.014 |
| PP4 | 64.77 | 32.75 | 0.63 | 0.0496 | 0.0678 | 0.015 |
| PP5 | 67.72 | 29.46 | 1.51 | 0.0346 | 0.0515 | 0.018 |

**Table 11. Summary results of chemical analysis of FeCr LC slag**

| Alloy grade | Chemical composition of FeCr LC slag [% wt.] | | | | | |
|---|---|---|---|---|---|---|
| | $Cr_2O_3$ | FeO, | $SiO_2$ | CaO | MgO | $Al_2O_3$ |
| P1 | 1.35 | 0.204 | 27.85 | 36.72 | 8.38 | 24.63 |
| P2 | 1.79 | 0.358 | 26.46 | 30.12 | 6.81 | 33.71 |
| P3 | 2.03 | 0.382 | 25.89 | 30.1 | 6.52 | 34.32 |
| P4 | 0.691 | 0.143 | 29.51 | 36.43 | 8.89 | 23.82 |
| P5 | 1.381 | 0.353 | 29.65 | 38.08 | 8.93 | 20.5 |
| PP1 | 7.35 | 0.131 | 31.07 | 32.21 | 8.55 | 19.63 |
| PP2 | 8.16 | 0.319 | 27.17 | 29.29 | 6.48 | 26.66 |
| PP3 | 2.09 | 0.895 | 32.39 | 36.57 | 6.12 | 21.41 |
| PP4 | 14.22 | 0.238 | 21.37 | 27.86 | 6.42 | 27.71 |
| PP5 | 3.98 | 1.002 | 27.63 | 36.06 | 8.65 | 21.91 |

Based on the performed mass balance of the FeCr LC production process, the chromium yield from the ore to FeCr LC was calculated, which, together with the residual content of $Cr_2O_3$ in the slag is a determinant of the reduction potential of the obtained alloys in the metallothermic process. Method of calculating the % chromium yield in the production of FeCr LC is defined as follows:

$$U_{\%Cr} = \frac{G_{Cr} - G_{Cr\,Crosimax}}{G_{Cr\,chromium\,ore}} \cdot 100\%$$

where:

$U_{\%Cr}$ - chromium yield by metallothermic reduction [%]
$G_{Cr}$ - mass of chromium obtained in the alloy, after the metallothermic reduction reaction [g]
$G_{Cr}$ - mass of chromium in the Crosimax alloy used as reductant [g]
$G_{Cr\,chromite\,ore}$ - mass of chromium in chromite ore [g]

Table 12 shows the results of chromium yield (reduction potential) using different alloy grades.

**Table 12. Chromium yield (reduction potential)**

| Sample No. | Cr yield [%] |
|------------|--------------|
| P1 | 95.75 |
| P2 | 95.73 |
| P3 | 95.19 |
| P4 | 96.17 |
| P5 | 93.68 |
| PP1 | 88.2 |
| PP2 | 89.46 |
| PP3 | 91.99 |
| PP4 | 88.26 |
| PP5 | 92.61 |

From the test results cited in Tables 10-12, it can be seen that when alloys comprising more than 4 % wt. aluminium and more than 3 % wt. calcium are used, the results of the reduction potential are lower than when using the contents of these elements in the range of 0.5 to 4.0 aluminium, 0.31 to 2.0 calcium. In addition, it was shown that at calcium contents of less than 0.01 wt. and aluminium contents of less than 0.5 % wt.. lower reduction potential results are obtained than for alloys with compositions according to the invention. The best reduction potential results were achieved for samples P1, P2 and P4, in which the amount of calcium ranges from 0.3 to 2.1 % wt., and the amount of aluminium from 0.5 to 3.1 % wt.

The result of increasing the mass content of silicon in the alloy in the range of 61-68 % wt. was the increase of the reduction potential to chromium ore in the FeCr LC production process as measured by the Cr yield to the alloy and the residual mass content of $Cr_2O_3$ in the waste slag. A comparison of the behaviour, including the reducing capacity of Fe-Si-Cr alloys, as reductants in the production of FeCr LC showed that the greatest influence on the reducing capacity of the alloys studied is the addition of silicon. The applied Ca and Al additives, at this concentration level, did not significantly change the reduction capacity of the these alloys, although the increase in the content of Al to 3.1 wt.% and Ca to 1.2 wt.% had a positive effect on increasing the efficiency of the reduction process compared to other Fe-Si-Cr alloys, but not as effectively as Si. An unexpected effect was a decrease in the reduction potential of the alloy with an increase in the mass content of Al above 4% and Ca above 2%, both of which have a higher affinity for oxygen than Si.

## Claims

1. A complex multi-component alloy of iron, silicon and chromium comprising, as a percentage by weight of the total weight of the alloy:

chromium in an amount of 21.5 to 25.5,
silicon in an amount of 63.5 to 68.0,
aluminium in an amount of 0.5 to 3.1,
calcium in an amount of 0.3 to 2.1,
carbon in an amount of 0 to 0.02,
the rest being iron and traces of impurities,
with a ratio of chromium to iron of not less than 2.0.

2. The complex multi-component alloy of iron, silicon and chromium according to claim 1, **characterised in that** it comprises calcium in an amount of 0.5 to 1.2 % wt. relative to the total weight of the alloy.

3. The complex multi-component alloy of iron, silicon and chromium according to claim 1, **characterised in that** it comprises aluminium in an amount of 0.5 to 1.3 % wt. relative to the total weight of the alloy.

4. A method of producing a complex multi-component iron alloy of iron, silicon and chromium according to any of the claims 1 to 3, **in that** the oxides of $SiO_2$ CaO, FeO, $Al_2O_3$ are reduced carbothermically in the presence of chromium and iron derived from high-carbon ferrochrome in an arc-resistance furnace, and then subjected to post-furnace decarburisation refining.

5. Use of a complex multi-component alloy of iron, silicon and chromium according to any of the claims 1 to 3 for the reduction of $Cr_2O_3$ comprised in chromium ore in the process of obtaining low carbon ferrochrome.

**Patentansprüche**

1. Komplexe Mehrkomponentenlegierung aus Eisen, Silicium und Chrom, umfassend in Gewichtsprozent bezogen auf das Gesamtgewicht der Legierung:

   Chrom in einer Menge von 21,5 bis 25,5,
   Silicium in einer Menge von 63,5 bis 68,0,
   Aluminium in einer Menge von 0,5 bis 3,1,
   Calcium in einer Menge von 0,3 bis 2,1,
   Kohlenstoff in einer Menge von 0 bis 0,02,

   wobei der Rest Eisen und Spuren von Verunreinigungen in Spuren ist, mit einem Verhältnis von Chrom zu Eisen von mindestens 2,0.

2. Komplexe Mehrkomponentenlegierung aus Eisen, Silicium und Chrom nach Anspruch 1, **dadurch gekennzeichnet, dass** sie Calcium in einer Menge von 0,5 bis 1,2 Gew.-% bezogen auf das Gesamtgewicht der Legierung umfasst.

3. Komplexe Mehrkomponentenlegierung aus Eisen, Silicium und Chrom nach Anspruch 1, **dadurch gekennzeichnet, dass** sie Aluminium in einer Menge von 0,5 bis 1,3 Gew.-% bezogen auf das Gesamtgewicht der Legierung umfasst.

4. Verfahren zur Herstellung einer komplexen Mehrkomponentenlegierung aus Eisen, Silicium und Chrom nach einem der Ansprüche 1 bis 3, **dadurch gekennzeichnet, dass** die Oxide $SiO_2$, CaO, FeO und $Al_2O_3$ carbothermisch in Anwesenheit von Chrom und Eisen, die aus kohlenstoffreichem Ferrochrom stammen, in einem Lichtbogenwiderstandsofen reduziert werden und anschließend einer nachgeschalteten Entkohlungsraffination unterzogen werden.

5. Verwendung einer komplexen Mehrkomponentenlegierung aus Eisen, Silicium und Chrom nach einem der Ansprüche 1 bis 3 zur Reduktion von in Chromerz enthaltenem $Cr_2O_3$ im Verfahren zur Herstellung von kohlenstoffarmem Ferrochrom.

**Revendications**

1. Alliage complexe multi-composant de fer, de silicium et de chrome comprenant, en pourcentage en poids par rapport au poids total de l'alliage :

du chrome en une quantité de 21,5 à 25,5,
du silicium en une quantité de 63,5 à 68,0,
de l'aluminium en une quantité de 0,5 à 3,1,
du calcium en une quantité de 0,3 à 2,1,
du carbone en une quantité de 0 à 0,02,

le reste étant du fer et des traces d'impuretés, avec un rapport chrome/fer d'au moins 2,0.

2. Alliage complexe multi-composant de fer, de silicium et de chrome selon la revendication 1, **caractérisé en ce qu'**il comprend du calcium en une quantité de 0,5 à 1,2 % en poids par rapport au poids total de l'alliage.

3. Alliage complexe multi-composant de fer, de silicium et de chrome selon la revendication 1, **caractérisé en ce qu'**il comprend de l'aluminium en une quantité de 0,5 à 1,3 % en poids par rapport au poids total de l'alliage.

4. Procédé de production d'un alliage complexe multi-composant de fer, de silicium et de chrome selon l'une quelconque des revendications 1 à 3, **caractérisé en ce que** les oxydes $SiO_2$, $CaO$, $FeO$ et $Al_2O_3$ sont réduits par voie carbothermique en présence de chrome et de fer issus de ferrochrome à haute teneur en carbone, dans un four électrique à arc et à chauffage par résistance, puis soumis à un affinage de décarburation après four.

5. Utilisation d'un alliage complexe multi-composant de fer, de silicium et de chrome selon l'une quelconque des revendications 1 à 3 pour la réduction du $Cr_2O_3$ contenu dans un minerai de chrome dans un procédé d'obtention de ferrochrome à faible teneur en carbone.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019240589 A1
- EP 3075869 A1
- EP 2295614 B1
- US 11542578 B2